(19) Europäisches Patentamt
European Patent Office
Office européen des brevets

(11) **EP 4 095 033 B1**

(12) **EUROPEAN PATENT SPECIFICATION**

(45) Date of publication and mention
of the grant of the patent:
**09.10.2024 Bulletin 2024/41**

(21) Application number: **21425028.4**

(22) Date of filing: **28.05.2021**

(51) International Patent Classification (IPC):
**B64C 11/20** *(2006.01)* **B64C 3/52** *(2006.01)*
**B64C 27/473** *(2006.01)* **B64C 3/18** *(2006.01)*

(52) Cooperative Patent Classification (CPC):
**B64C 11/20; B64C 3/185; B64C 3/52; B64C 27/473**

(54) **STRUCTURAL MODULE FOR FIXED OR ROTARY WING**

STRUKTURMODUL FÜR STARR- ODER DREHFLÜGEL

MODULE STRUCTURAL POUR VOILURE FIXE OU TOURNANTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**30.11.2022 Bulletin 2022/48**

(73) Proprietor: **C.I.R.A. (Centro Italiano Ricerche
Aerospaziali) -
S.C.P.A.
81043 Capua (CE) (IT)**

(72) Inventors:
• **Ameduri, Salvatore
80128 Napoli (IT)**
• **Ciminello, Monica
81043 Capua (CE) (IT)**

• **Concilio, Antonio
81034 Mondragone (CE) (IT)**
• **Dimino, Ignazio
81100 Caserta (CE) (IT)**
• **Galasso, Bernardino
80030 Cimitile (NA) (IT)**
• **Guida, Mariano
80062 Meta (NA) (IT)**

(74) Representative: **PGA S.p.A.
Via Mascheroni, 31
20145 Milano (IT)**

(56) References cited:
**EP-A1- 3 453 609    EP-A2- 2 428 679
EP-A2- 2 664 537    US-B2- 7 131 611
US-B2- 8 128 020**

## Description

### Field of the Invention

The present invention relates to a structural module for a fixed or rotary wing. In particular, the present invention relates to devices for managing the twist or torsion of the wing.

The present invention falls within the scope of technical fields that exploit fluids to generate fluid-dynamic forces suitable for different purposes, such as in the aeronautical field (fixed-wing or rotary-wing aircraft), in the automotive field (e.g. wings, ailerons, aerodynamic appendages of vehicles), in power generation plants (e.g. wind power plants but also turbines of power plants).

### Background of the invention

In this field, the possibility of modifying the twist law of the wing is of considerable interest because of the resulting advantages in terms of efficiency and forces generated. For example, with reference to rotary wings or blades, the possibility of modifying the twist law of the blade of a helicopter is of considerable interest for flight regimes (hover and vertical climb) normally penalized in the design phase, as characterized by conflicting requirements with respect to other phases (cruise) more extended in the helicopter envelope. In addition to the aforementioned hover and vertical climb regimes, blade twist can also play an important role during slow cruise. The alteration of the twist angle of the wing or blade along its span represents a very effective type of "morphing" as it is extremely distributed but, at the same time, difficult to implement due to the small space available, the magnitude of centrifugal forces and the high flexibility of the blade structure. Conventional implementation solutions, not compact and characterized by several components whose relative movement could be altered if not completely inhibited by centrifugal actions, are difficult to implement and pose significant maintenance problems.

Known type solutions adopt shape memory rotary actuators to cause the wing or blade to twist.

For instance, document US6499952 discloses a rotary actuator employed in a helicopter blade. The rotary actuator comprises a torsion tube formed from a shape memory alloy (SMA), a super elastic NiTinol return spring associated with the torsion tube and configured to return the torsion tube to an initial position, and an element for heating the torsion tube and activating it to cause a rotation of an object connected to the torsion tube or to generate a torque on such an object. The torsion tube and spring are connected at their ends and the torsion tube is pre-twisted relative to the spring to ensure its martensitic state. Activation of the heating element causes transition of the torsion tube to an austenitic state in which it is brought into the previous non-twisted configuration. Removal of the heat allows the torsion tube to return to the martensitic state when the return spring twists the torsion tube again. Document US6065934 discloses a rotary actuator similar to that illustrated in document US6499952.

Document EP3127804 discloses propeller blades actuated via a shape memory alloy. The propeller blade includes a blade body, a plate coupled to the blade body, a torque transfer element, and a shape memory alloy (SMA) actuator. The torque transfer element has a distal end attached to the plate, such that the torque transfer element applies to the plate at least a portion of the torque applied to a proximal end of said torque transfer element. A distal end of the shape memory alloy (SMA) actuator is attached to the torque transfer element while a proximal end of the SMA actuator is attached to the blade body. The SMA actuator is configured to apply torque to the proximal end of the torque transfer element in response to the application of heat to the SMA actuator. Since the portion of the blade body adjacent to the plate rotates but the blade root does not, the rotation causes a twist deformation of the blade body.

Document EP3453609A1 discloses a wing-twist aircraft having a wing, an actuation system, a sensor and a controller. The wing has a wingspan that extends to a wing tip. The wing includes a spar aligned in a spanwise direction, wherein ribs are operatively coupled to the spar. The actuation system is configured to rotate the spar, which, in turn, torsionally rotates the ribs coupled to the spar, thereby twisting the wing. The sensor is configured to measure a characteristic of the wing, while the controller is configured to command the actuation system to rotate the spar based on input from the sensor.

Document EP2428679A2 discloses a rotational actuator assembly which employs a first torsion actuator having a shape memory alloy tube with a first trained twist direction and a second torsion actuator having a shape memory alloy tube with an opposite trained twist direction collinear with the first torsion actuator with abutting proximal ends. A central fitting joins the proximal ends. A control system for temperature control of the first torsion actuator and second torsion actuator about an average temperature provides combined antagonistic rotation of the central fitting.

The Applicant has observed that the known solutions described above are definitely invasive because they imply the design of structures clearly different from the classical wings/blades structures (i.e. those that do not provide for the possibility to actively vary the twist along the span) in order to achieve the desired effect (i.e. the active variation of the twist along the span). This implies the need to redesign the entire structure in order to integrate the devices that enable the desired effect, such as the torsional actuators shown above.

The Applicant also noted that the known solutions described above are bulky and difficult to integrate into pre-existing structures and are not usually able to cooperate with such pre-existing structures in absorbing external loads.

The Applicant therefore set itself the objective of proposing a non-invasive solution, in the sense of not requiring for its integration a distortion of the classic construction of the blade/wing.

The Applicant also set itself the objective of proposing a compact and preferably monolithic solution.

The Applicant also set itself the objective of proposing a solution that can be integrated into pre-existing structures.

The Applicant also set itself the objective of proposing a solution capable of collaborating with said pre-existing structures in taking the external loads (aerodynamic, centrifugal, inertial forces).

The Applicant also set itself the objective of proposing a solution allowing accurate adjustment of the wing/blade geometry.

In particular, the Applicant set itself the objective to propose a solution that would allow the wing/blade geometry to be reconstructed from strain measurements and to use that geometry to increase the adjustment accuracy.

## Summary of the invention

The invention consists of an integrated system, capable of altering the twist angle of a wing element and reconstructing the deformed configuration produced by the combined action of the torsion system and external actions (aerodynamic, centrifugal, inertial), distinguishing the various components (torsion, bending).

The invention relates to a structural module for fixed or rotary wing according to claims 1 to 13.

The invention also relates to a fixed or rotary wing according to claims 14 and 15 The leading edge structure or front structural element is capable of taking both loads arising from the actuation system incorporated within (torsion bar and actuation devices) and external loads (aerodynamic, inertial, centrifugal).

The Applicant has verified that, due to the torsional preload with which the torsion bar is mounted on the leading edge structure and due to the elastic deformability of the leading edge structure, the structural module arranges itself in a configuration/point of elastic equilibrium (corresponding to the predefined twist of the leading edge structure), in which the torsional force exerted by the torsion bar and the elastic torsional force of the leading edge structure balance each other. When the actuating devices change the torsional stiffness and/or angular geometry of the torsion bar, the structural module arranges in a different configuration/point of elastic balance corresponding to a different twist of the leading edge structure. The Applicant has also verified that the torsional preload and elasticity of the leading edge structure ensures that it will return to its initial configuration.

The plurality of preload positions allow the level of preload and pre-twist to be modulated, depending on the application.

The Applicant has first verified that the invention allows the geometry and in particular the twist of a wing along its span to be verified and controlled/set with accuracy and speed.

In particular, the Applicant has verified that the invention is capable of altering the twist angle of a blade element and reconstructing the deformed configuration produced by the combined action of the torsion system and external actions (aerodynamic, centrifugal, inertial), distinguishing the various components (torsion, bending).

The Applicant has verified that the structure of the module(s) according to the invention is simple, compact, durable and reliable.

The Applicant has also verified that the structure of the module(s) according to the invention is unobtrusive, compact, monolithic, can be integrated into the pre-existing structure and is capable of cooperating with it in absorbing external loads.

In particular, the Applicant has verified that the integration of the structural modules according to the invention for about 80% of the span of a blade of a reference helicopter, produces a benefit in terms of power saving in hover condition, quantifiable in 10%, net of the power required by the activation of the device. A further power saving is also expected in the slow cruise regime, up to practically 1/3 of the maximum flight speed. This second benefit is quantifiable in an average power reduction over the entire slow cruise range of more than 7%.

Further features and advantages will become clear from the detailed description of a preferred, but not exclusive, embodiment of a structural module for a fixed or rotary wing in accordance with the present invention.

## Description of drawings

Such description will be set forth below by reference to the set of drawings, provided simply as a non-limiting example, in which:

- Figure 1 illustrates a structural module for fixed or rotary wing in accordance with the present invention;
- Figure 2 illustrates a first element of the structural module in Figure 1;
- Figure 3 is an enlargement of a portion of the first element in Figure 2;
- Figure 4 is an enlargement of a different portion of the first element in Figure 2;
- Figure 5 illustrates a second element of the structural module in Figure 1;
- Figure 6 illustrates a third element of the structural module in Figure 1;
- Figure 7 illustrates a fourth element of the structural module in Figure 1;
- Figure 8 illustrates a fifth element of the structural module in Figure 1;
- Figure 9 illustrates the fifth element in Figure 8 from a different point of view;
- Figure 10 illustrates the fourth element in Figure 7 from a different point of view;

- Figure 11 illustrates a sixth element of the structural module in Figure 1;
- Figure 12 is a schematic plan view of the sixth element in Figure 11;
- Figure 13 illustrates a device that can be coupled to the first element in Figure 2;
- Figure 14 illustrates the device in Figure 13 from a different point of view;
- Figure 15 illustrates an assembly comprising the first element, second element, and third element of Figures 2, 5, and 6 coupled to the device of Figures 13 and 14; and
- Figure 16 illustrates a stress-strain diagram related to elements of the structural module in the previous Figures.

Detailed description of an embodiment of the invention

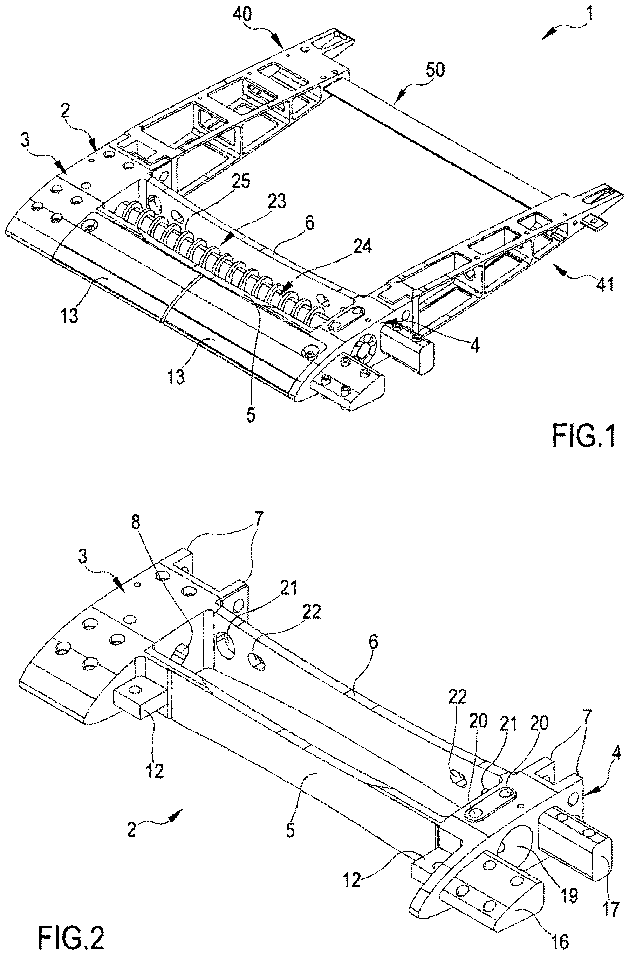

Referring to the attached Figure 1, a structural module for a fixed or rotary wing in accordance with the present invention is identified by reference numeral 1.

The wing, not illustrated as a whole, may comprise a single structural module 1 or a plurality of structural modules 1 arranged sequentially along a wingspan and mutually connected, as will be described below. The wing further comprises a covering arranged around and connected to the structural module(s) to define a surface of the wing.

The structural module 1 consists of an integrated system, able to alter the twist angle of a wing element and to reconstruct the deformed configuration produced by the combined action of the torsion system and external actions (aerodynamic, centrifugal, inertial), distinguishing the various components (torsion, bending). The structural module 1 comprises a leading edge structure 2 (Figure 2) meaning a structure located toward the leading edge of the wing to which it belongs.

The leading edge structure 2 comprises a first connecting member 3, a second connecting member 4, a first spar section 5 (forwardly positioned towards the leading edge) and a second spar section 6 (rearwardly positioned with respect to the leading edge). Each of said first spar section 5 and said second spar section 6 has the outline of a flat bar. Each of said first spar section 5 and second spar section 6 is interposed between said first connecting member 2 and said second connecting member 3 and is integral with said first connecting member 2 and said second connecting member 3 to form a monolithic structure made of metallic material, for example made from solid or by casting.

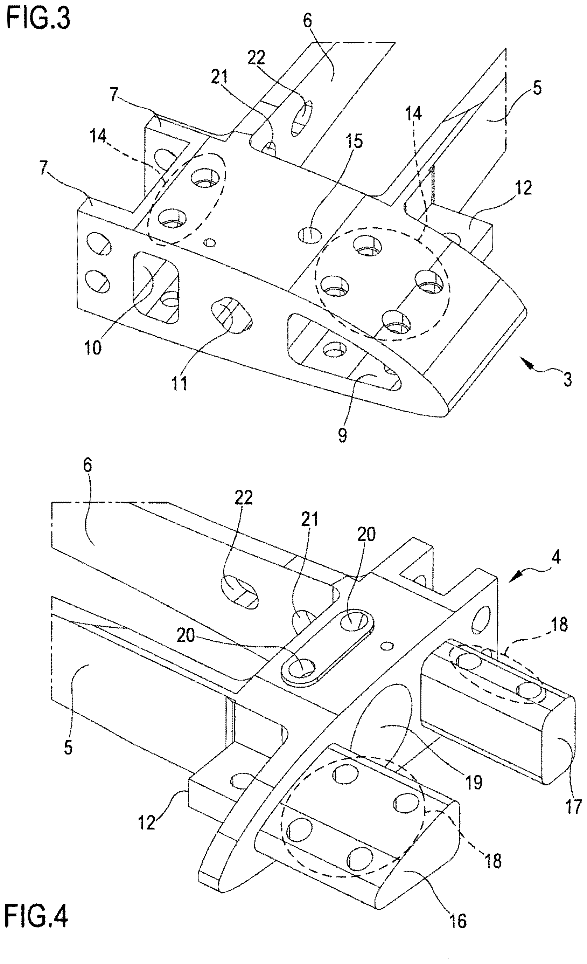

As best seen in Figures 2 and 3, the first connecting member 3 has a front part with a shape corresponding to a portion of the airfoil located at the leading edge of the wing, a rear part provided with rear attachments 7, an inner side and an outer side. The attachments 7 are defined, for example, by perforated plates.

From the inner side, the first spar section 5 and the second spar section 6 are developed. The inner side also has a first seat 8 which is located between the first spar section 5 and the second spar section 6. The first seat 8 has a substantially square outline.

On the outer side, a first recess 9 located near the front part, a second recess 10 further back and a second seat 11 located between the first recess 9 and the second recess 10 are made. The first recess 9 has a substantially triangular section, similar to the outline of the front part. The second recess 10 has a substantially rectangular outline section. The second seat 11 and the first seat 8 define a through hole.

At a corner bounded by the inner side of the first connecting member 3 and a front surface of the first spar section 5 a front attachment 12 is positioned for anchoring a possible balancing mass 13, visible in Figure 1.

Holes 14 opening in the first recess 9 and the second recess 10 are made in the first connecting member 3. An additional hole 15 is made in the first connecting member 3 for anchoring any external balancing mass, not shown.

The balancing masses are intended to maintain the position of the center of gravity in the first quarter of the airfoil chord.

The second connecting member 4 also has a front part with a shape corresponding to a portion of the airfoil located at the leading edge of the wing, a rear part provided with rear attachments 7, an inner side and an outer side (Figures 3 and 4). The attachments 7 are defined, for example, by perforated plates.

From the inner side, the first spar section 5 and the second spar section 6 are developed.

From the external side, a first projection 16 and a second projection 17 are developed, counter-shaped respectively to the first recess 9 and to the second recess 10, that is to say, the first recess 9 presents an outline that reproduces in negative the outline of the first projection 16 and the second recess 10 presents an outline that reproduces in negative the outline of the second projection 17.

The first recess 9 and the second recess 10 on one side and the first projection 16 and the second projection 17 on the other side allow connection of the structural module 1 with adjacent structures. For example, if the wing comprises multiple structural modules 1, the first recess 9 and the second recess 10 house the first projection 16 and the second projection 17 of a structural module 1 adjacent to the first connecting member 3 while the first projection 16 and the second projection 17 are housed in the first recess 9 and the second recess 10, respectively, of a different structural module 1 adjacent to the second connecting member 4.

The first projection 16 and the second projection 17 are provided with holes 18 (Figures 2 and 4) configured to receive locking pins or screws, not shown, inserted into holes 14 of the first connecting member 3, to lock the first projection 16 and the second projection 17 into the respective first recess 9 and second recess 10 of the adjacent structural module 1.

The second connecting member 4 has a circular through-seat 19 (Figure 4) that opens on both the inner and outer sides and is positioned between the first projection 16 and the second projection 17 and between the first spar section 5 and the second spar section 6. Radial through holes 20 are drilled in the second connecting member 4 and open into the circular through-seat 19.

A front attachment 12 (Figures 2 and 4) for anchoring any additional balancing mass 13, visible in Figure 1, is positioned at a corner bounded by the inner side of the second connecting member 4 and the front surface of the first spar section 5.

The second spar section 6 has first passages 21 for wiring, such as for power cables and/or sensors, and second passages 22 for engaging compressed air from a compressed air source, the function of which will be explained later.

The structural module 1 comprises a torsional actuator 23 which is mounted on the leading edge structure 2 and comprises a torsion bar 24, actuating devices 25 operatively coupled to the torsion bar 24, and a preload crown 26 coupled to the torsion bar 24. The torsion bar 24 may be solid or tubular.

The torsion bar 24 of the illustrated embodiment example comprises a central portion 27 located between a first end 28 (or first interface zone) and a second end 29 (or second interface zone).

The central portion 27 is made of a Shape Memory Alloy (SMA) such as NiTinol (Nickel Titanium Naval Ordinance Laboratory). The central portion 27 has, for example, a circular cross-section.

Each of the first end 28 and second end 29, on the other hand, has a non-circular cross-section, for example substantially square. The first end 28 is counter-shaped to the first seat 8 so as to fit axially into said first seat 8 formed in the first connecting member 3 and, once inserted, not to be able to rotate with respect to said first connecting member 3.

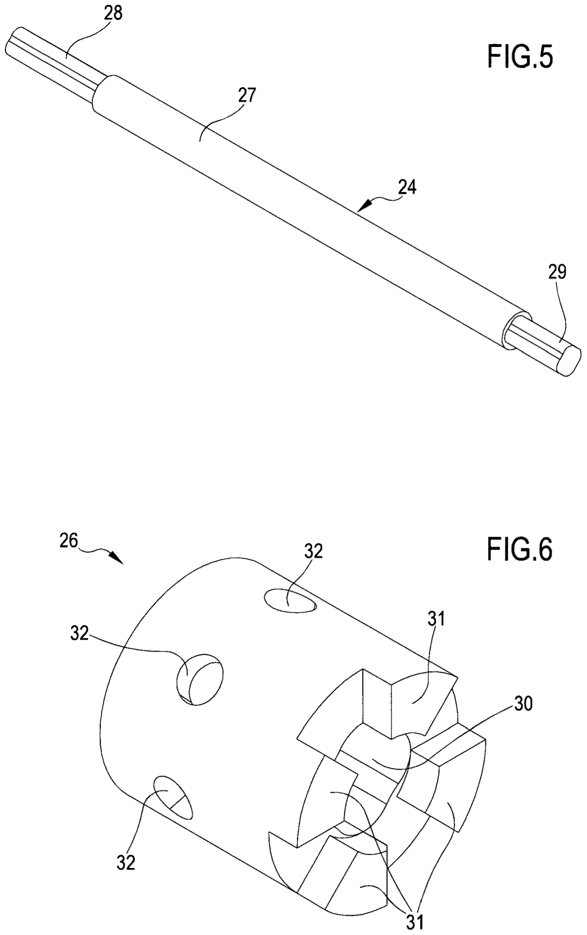

The preload crown 26 (Figure 6) has a cylindrical outer surface and an axial bore 30 having a non-circular cross-section and configured to accommodate the second end 29 of the torsion bar 24. The axial bore 30 is counter-shaped to the second end 29 of the torsion bar 24 and accommodates said second end 29 so that the preload crown 26 cannot rotate relative to the torsion bar 24. The second end 29 of the torsion bar 24 and the axial bore 30 are, in particular, shaped to be able to axially mount the preload crown 26 on the second end 29 according to a plurality of keying angles.

An edge of said preload crown 26 that, when the preload crown 26 is properly mounted on the torsion bar 24, faces away from the central portion 27, has a shaped profile (or interface) configured to engage with a tool capable of applying a torque to the preload crown 26 and to the torsion bar 24. In Figure 6, said shaped profile has teeth 31 and recesses. In the illustrated non-limiting example, there are four teeth 31 and recesses.

The preload crown 26 also has a plurality of radial holes 32 formed in the cylindrical outer surface and opening into the axial bore 30.

The actuating devices 25 are defined by a heating element comprising an electrical resistance spirally wound around the central portion 27 of the torsion bar 24. The electrical resistance is connected to a source of electrical energy, not illustrated in the Figures, and is intended to heat by Joule effect and to heat by conduction the central portion 27 of the torsion bar 24 with which it lies in contact. An axial spacing of the coils of the electrical resistance is intended to obtain a uniform distribution of temperature over the central portion 27. The cross-sectional area of the bead of which the coils are formed is shaped to maximize contact with the shape memory alloy bar and, therefore, the heat transmitted to it.

In other embodiments, not shown, the shape memory alloy may be activated by any type of heating, such as direct electrical heating by Joule effect or by hot gas.

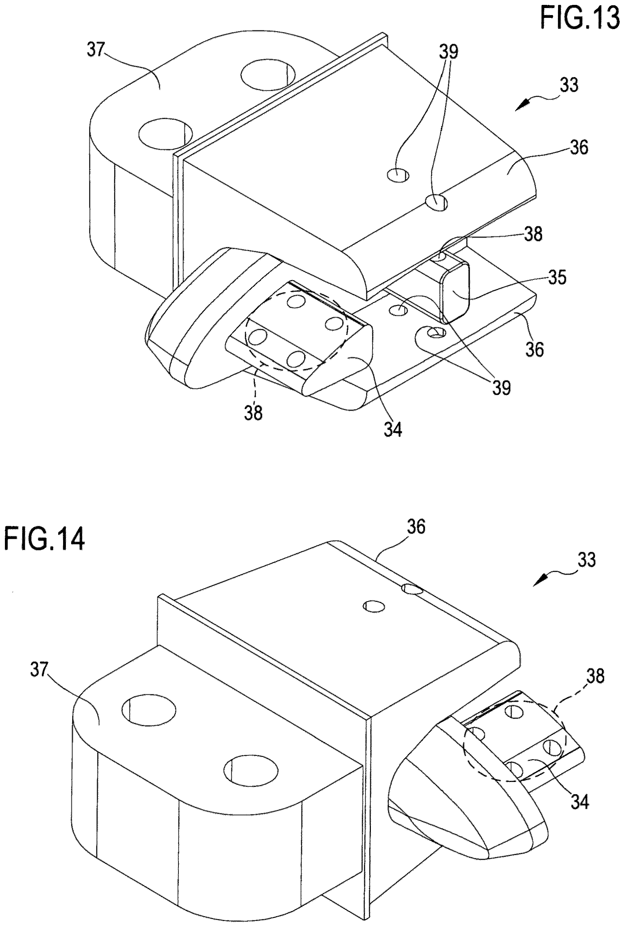

The torsional actuator 23 is mounted on the leading edge structure 2 and is preloaded using, for example but not necessarily, the device 33 shown in Figure 13. Said device 33 for preloading the torsional actuator 24 on the leading edge structure 2 is a monolithic metal piece comprising a first auxiliary projection 34 and a second auxiliary projection 35 shaped respectively as the first projection 16 and the second projection 17 of the structural module 1 and a pair of external protrusions 36 configured to straddle the first connecting member 3. The first auxiliary projection 34 and the second auxiliary projection 35 are disposed between the two external protrusions 36.

On the side of the device 33 opposite the first auxiliary projection 34, the second auxiliary projection 35, and the external protrusions 36 is a portion 37 configured to be clamped in a clamp or bolted to a flange, not shown.

The torsional actuator 23 is mounted on the leading edge structure 2 by inserting the first end 28 of the torsion bar 24 into the first seat 8 so as to accommodate the preload crown 26 keyed to the second end 29 in the circular through-seat 19. The torsion bar 24 is located between the first spar section 5 and the second spar section 6 and is substantially parallel to the first spar section 5 and the second spar section 6.

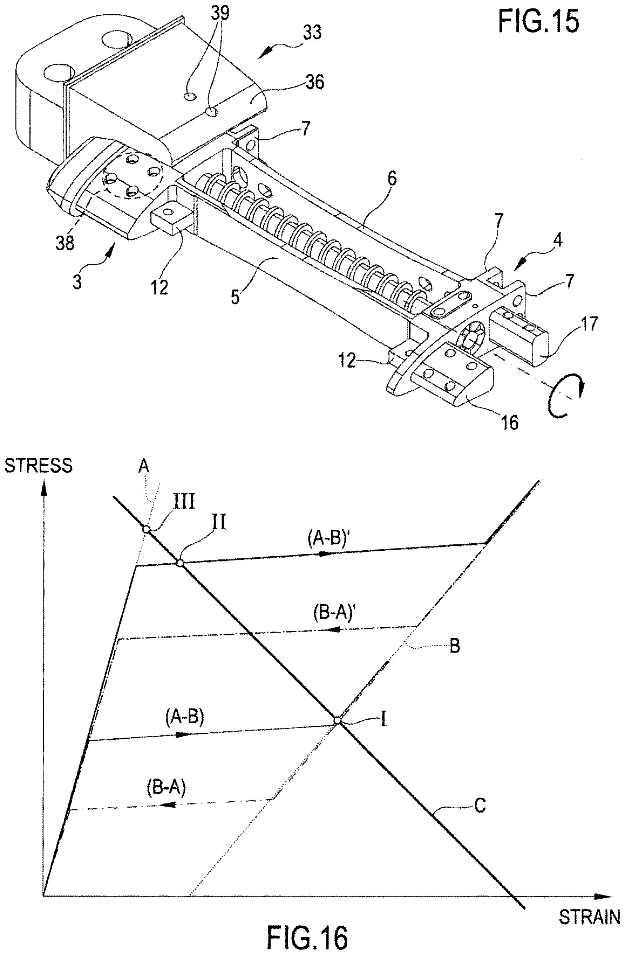

The assembly thus formed is mounted on the device 33 for preloading the torsional actuator by arranging the first connecting member 3 between the external protrusions 36 and inserting the first auxiliary projection 34 and the second auxiliary projection 35 into the first recess 9 and the second recess 10, respectively. The assembly is then locked onto the device 33 by means of screws or pins inserted into holes 38 formed through the first auxiliary projection 34 and the second auxiliary projection 35 and/or into holes 39 formed through the external protrusions 36 (Figure 15).

The device 33 for preloading the torsional actuator is then clamped, for example, on a clamp via the portion 37.

While the assembly is thus clamped, a suitable tool, not shown, is engaged with the teeth 31 of the shaped profile of the preload crown 26 and a torque is applied to the preload crown 26 and thus also to the torsion bar 24. The preload crown 26 rotates within the circular through-seat 19 and the torsion bar 24 is elastically twisted about its own longitudinal axis, for example with reference to Figure 15 in a clockwise direction until the radial holes 32 are brought into correspondence with the radial through holes 20 of the second connecting member 4. Pins are now inserted into the radial holes 32 and the radial through holes 20 to lock the torsion bar 24 in the elastically twisted configuration, i.e., with a given torsional preload.

The preload obtained is a function of the angle at which the preload crown 26 is mounted on the second end 29.

The radial holes 32, the radial through holes 20, and the pins constitute locking devices interposed between the second end 29 of the torsion bar 24 and the circular through-seat 19 for locking the second end 29 in the preload position. Such locking devices are configured to lock the second end 29 in a plurality of preload positions, each corresponding to a preload torsion of the torsion bar 24. In other words, it is possible to torque the bar 24 by more or less by aligning different holes 32 and 20. Due to the torsional preload with which the torsion bar 24 is mounted on the leading edge structure 2 and due to the elastic deformability of the leading edge structure 2, the structural module 1 arranges in a configuration/point of elastic equilibrium (corresponding to a predefined twist of the leading edge structure 2), in which the torsional force exerted by the torsion bar 24 and the torsional elastic force of the leading edge structure 2 are balanced.

In the example of Figure 15, since the torsion bar 24 is preloaded in a clockwise direction, it tends to twist the leading edge structure 2 in a counterclockwise direction, so in the equilibrium configuration, the leading edge structure 2 will be twisted with a predefined counterclockwise twist to dive from the first member 3 toward the second member 4.

Prior to locking the second end 29 in the preload position permanently, it is also possible to rotate the preload crown and release it a plurality of times, to maximize the percentage of martensitic phase in the torsion bar 24, which is an indication of the exploitability of the alloy for the purpose of subsequent actuation.

The structural module 1 further comprises a first appendage 40 that is connected to the first connecting member 3 through a first interface 42 connected to respective rear attachments 7 of the first connecting member 3 and extends toward a trailing edge of the wing. A second appendage 41 is connected to the second connecting member 4 through a second interface 43 connected to respective rear attachments 7 of the second connecting member 4 and extends toward a trailing edge of the wing (Figure 1). As can be seen by observing Figure 1, the first connecting member 3 and the first appendage 40 together define a respective first rib of the structural module 1, and the second connecting member 4 and the second appendage 41 together define a respective second rib of the structural module 1.

Both the first and second appendages 40, 41 have a substantially lattice structure with stiffening elements. Their geometry is such that they do not cause an undue backward displacement of the center of gravity of the assembly of Figure 1. Housing holes 44 are also provided for connection of any additional subsystems and sensors. The first appendage 40 and second appendage 41 are connected to the coating, not shown, by screws or rivets housed in respective holes 45 cut in said first appendage 40 and second appendage 41.

The first appendage 40 has, when properly mounted on the respective first connecting member 3, an inner side facing the second appendage 41 of the same structural module 1 and an outer opposite side. Similarly, the second appendage 41 has, when properly mounted on the respective second connecting member 4, an inner side facing the first appendage 40 of the same structural module 1 and an outer opposite side.

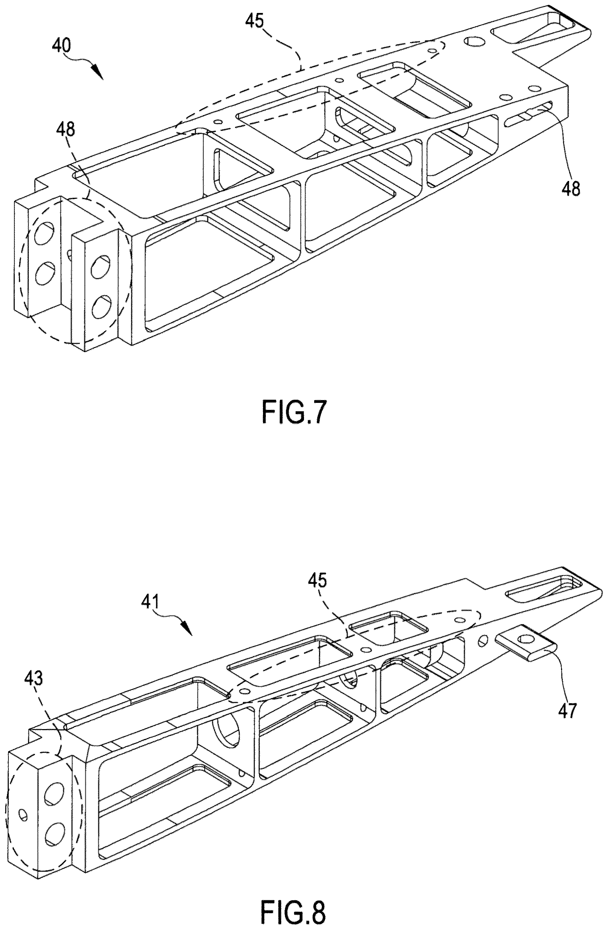

The outer side of the first appendage 40 has a shaped hole 46 located at a tail end of the first appendage 40 while the outer side of the second appendage 41 has an extrudate 47 located at a tail end of the second appendage 41. The shaped hole 46 is configured to possibly house the extrudate 47 of the second appendage 41 of an adjacent structural module 1 (Figures 7, 8, 9, 10).

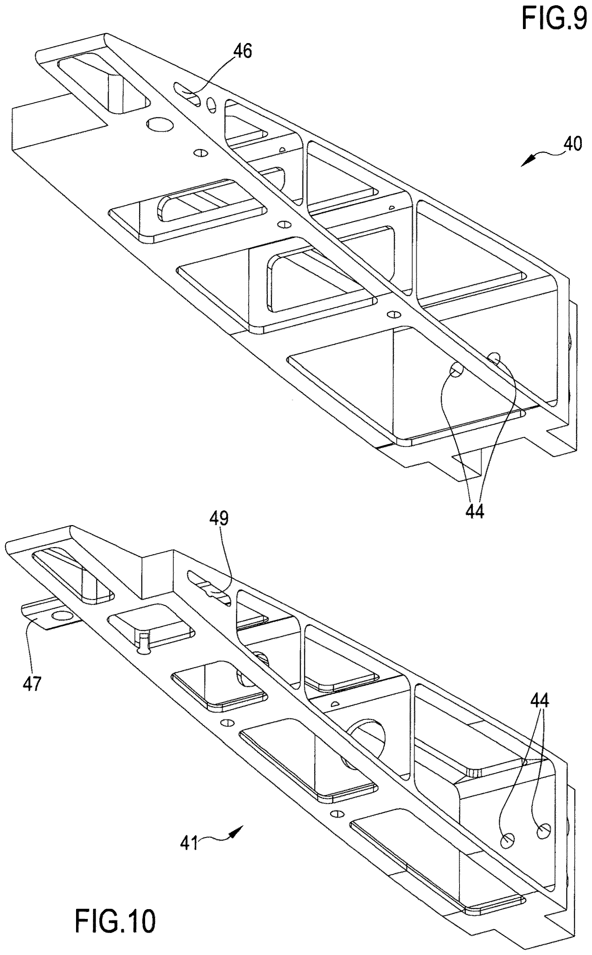

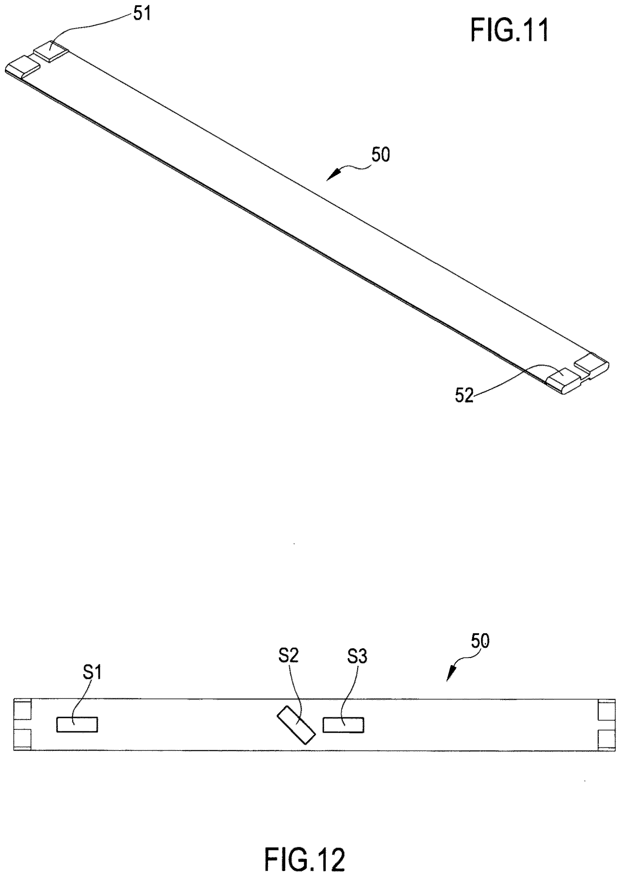

The inner side of the first appendage 40 has a first shaped hole 48 and the inner side of the second appendage 41 has a second shaped hole 49 (Figures 7 and 9). A plate-shaped elongate element 50 (Figure 11) connects one end of the first appendage 40 with one end of the second appendage 41 and is disposed at the trailing edge of the wing. A first end 51 of the elongate element 50 is inserted into the first shaped hole 48, is herein secured/locked by screws while a second end 52 of the elongate element 50, is inserted into the second shaped hole 49 of the second appendage 41 and can slide into said second shaped hole 49 with a certain clearance and without exiting therefrom.

The first appendage 40 and second appendage 41 are intended to transmit the load to the covering and the strain to the elongated member 50.

Strain sensors are operatively coupled to the elongate member 50. In the illustrated non-limiting example, three strain gauges S1, S2, S3 are applied to the elongate member 50 as schematically shown in Figure 12 and are configured to detect strains in the elongate member 50 and, indirectly, in the structural module 1. Other types of strain sensors may be used, such as fiber optic sensors.

The three strain gauges comprise: a first strain gauge S1 sensitive to axial strain arranged at the first end of the elongate member 50 and oriented along the longitudinal development of said elongate member; a second strain gauge S2 sensitive to shear strain arranged at an intermediate zone of the elongate member 50 and inclined at 45° with respect to the longitudinal development of the elongate member 50; a third strain gauge S3 sensitive to axial strain arranged near the second strain gauge S2 and oriented along the longitudinal development of said elongate member.

The aforementioned first shaped hole 48 and second shaped hole 49 and also the first and second ends 51, 52 of the elongate element 50 have shaped recesses to facilitate the passage of cables of the strain gauges S1, S2, S3 integrated on the elongate element 50.

The strain gauges S1, S2, S3 are operatively connected to an electronic control unit that is configured and/or programmed to receive strain signals from the strain gauges S1, S2, S3 and to calculate the twist of the structural module 1 as a function of the received strain signals. The electronic control unit, not shown, is part of, for example, the control systems of the apparatus on which the wing is mounted, such as a fixed-wing or rotary-wing aircraft (e.g., helicopter), a vehicle, a vessel, or a power-generating apparatus (e.g., wind blade).

The same electronic control unit is also configured/programmed to control/command the torsional actuator 23. In particular, the electronic control unit is configured/programmed to power the heating element, i.e., the electrical resistance spirally wound around the central portion 27 of the torsion bar 24 so as to heat said central portion 27. Since the heating element is integrated with a thermal sensor connected to the control unit, said control unit is therefore able to control and maintain the temperature at a desired and/or predefined value. Said predefined temperature value is a function of the type of shape memory material adopted for the torsion bar 24. For example, for the torsion bar 24 described herein, it is between 90°C and 150°C, depending on the level of activation to be achieved. In fact, it is possible to set intermediate temperatures, to which intermediate twist transfers correspond.

At room temperature, the configuration/point of elastic preload equilibrium (between the leading edge structure 2 and preloaded torsion bar 24) is illustrated in the Strain - Stress diagram in Figure 16 with the Roman numeral "I" (equilibrium point at first temperature T1).

In that diagram, the line C represents the leading edge structure 2.

Lines A, B, (A-B), (B-A), (A-B)' and (B-A)' represent the, inherently known, behavior of the shape memory torsion bar 24 during loading and unloading and at different temperatures.

Line A represents the austenitic behavior of the shape memory alloy torsion bar 24, line B represents the martensitic behavior of the torsion bar 24.

Line (A-B) is the austenite to martensite transition of the shape memory alloy torsion bar 24 in a loading phase, line (B-A) is the martensite to austenite transition of the shape memory alloy torsion bar 24 in an unloading phase, both performed at a first temperature "T1" of said bar 24, specifically at the ambient temperature at which the torsion bar 24 is mounted with preload on the leading edge structure 2.

Line (A-B)' is the change from austenite to martensite of shape memory alloy torsion bar 24 in a loading step, line (B-A)' is the change from martensite to austenite of the shape memory alloy torsion bar 24 in an unloading step, both performed at a second temperature "T2" of said bar 24 greater than the first temperature "T1".

When the torsion bar 24 is preloaded at room temperature "T1" it follows the line (A-B) and then B. Once clamped on the leading edge structure 2, as shown above, the leading edge structure 2 and the shape memory bar 24 move to the equilibrium point "I".

Heating operated by the heating element upon command of the electronic control unit results in a transformation of the stress-strain curve of the shape memory alloy part/portion of the torsion bar 24 that shifts upward and follows the lines (A-B)' and (B-A)' in Figure 16. Heating causes a change in the torsional stiffness of the torsion bar 24 and in its angular geometry. As a result, the torsional elastic configuration/equilibrium point of the leading edge structure 2 associated with torsion bar 24 changes and, in Figure 16, this new equilibrium point is denoted by the Roman numeral "II" (equilibrium point at the second temperature T2).

The structural module 1 is arranged in a different configuration/point of elastic equilibrium corresponding to a different twist of the leading edge structure. In particular, in the example illustrated herein, the increase in stiffness of the torsion bar 24 and the change in its angular geometry result in a decrease in the twist of the leading edge structure 2, i.e., the preload of the present example is at diving and when the SMA is activated the end angle is even more at diving. In variant embodiments, the increase in stiffness and the change in geometry may correspond to an increase in the twist of the leading edge structure compared to the default twist.

Figure 16 also illustrates an equilibrium point "III" at the maximum allowable recovery.

When, again at the command of the electronic control unit, the power supply to the heating element ceases and the torsion bar 24 cools down, i.e., in the absence of thermal stress, the torsional preload of the torsion bar 24 and the elasticity of the leading edge structure 2 ensure return to the initial configuration (i.e., to the equilibrium point "I"). The return may be facilitated/accelerated by cooling the torsion bar 24, for example by compressed air from the compressed air source part of the apparatus on which the wing is mounted.

Prior to mating the torsion bar 24 to the leading edge structure 2, relaxation cycles of the torsion bar 24 can be performed, consisting of heating to an appropriately higher temperature than the austenite finish temperature and subsequent cooling. Such thermal cycles work to stabilize the performance of the shape memory alloy. As previously described, the electronic control unit integrates a system capable of reconstructing the shape of the structural module 1 from the signals of the strain gauges S1, S2, S3.

To this end, the operation of the shape reconstruction system involves a calibration operation to be performed only once in the operational life of the structural module 1. This process comprises the following operations:

a) Pure torsion stress of the structural module 1 of Figure 1 by activating torsional actuator 23 and measuring the transmitted twist $\vartheta$.

b) Readout of the strain measured by the second sensor S2. The particular constraint condition is such that, for this type of stress, the measurement provided by the second sensor S2 provides the torsion stress $\varepsilon_{2T}$ of the elongated plate-shaped element 50, purged of the flexural contribution. At the end of this operation, the shear strain read by the second sensor S2 per unit torsion angle will be obtained, i.e.: $r_{\vartheta 2}=\varepsilon_{2T}/\vartheta$.

c) Readout of the strain measured by the first sensor S1, $\varepsilon_{1T}$, and evaluation of the strain per unit vertical displacement, v, and torsion angle, $\vartheta$, i.e.:

$$r_{v1} = \varepsilon_{1T}/v \text{ and } r_{\vartheta 1}=\varepsilon_{1T}/\vartheta.$$

d) Evaluation of the ratio of the strain measured by the first sensor S1, $\varepsilon_{1T}$, to that measured by the second sensor S2, $\varepsilon_{2T}$, i.e., $r\vartheta = \varepsilon_{2T}/\varepsilon_{1T}$.

Instead, the process of reconstructing the shape under a generic stress and separating the torsional and flexural contributions involves the following steps:

1. Readout of the strains measured by the three sensors.

2. Evaluation of the torsion angle as proportional to the measurement provided by the second sensor S2 for the ratio $r_{\vartheta 2}$.

3. Evaluation of the contribution due to bending on the first sensor S1, $\varepsilon_{1B}$, as the product of the strain measured by the second sensor S2, $\varepsilon_2$, by the difference of the inverses of the current ratio of strains read from the first and second sensors S1 and S2, r, and that measured in the calibration process, r$\vartheta$, i.e.: $\varepsilon_{1B}=\varepsilon_2 \times (1/r - 1/r\vartheta)$.

4. Evaluation of the pure vertical displacement caused by bending, $v_B$, from integration of the strain field described by the values $\varepsilon_{1B}$ and $\varepsilon_3$ where $\varepsilon_3$ is the strain read by the third strain gauge S3.

In use, the electronic control unit adjusts the twist of the wing by acting on the actuation devices 25 according to a received command and/or at least one predefined twist profile contained in a memory of the same electronic control unit and according to the deformation signals coming from the deformation sensors. In other words, the electronic control unit knows at any time the current geometry of the structural module 1 and of the wing to which the structural module 1 belongs and is able to vary/correct said geometry when receiving appropriate commands so as to make said wing assume a target geometry.

If the wing comprises a plurality of mutually constrained structural modules, for example occupying about 80% of the wingspan, the electronic control unit is programmed/configured to calculate the geometry of the wing and to independently control the actuation devices 25 of each structural module 1 to adjust the twist of the entire wing. The electronic control unit may also be configured and/or programmed to control the compressed air source and/or valves located on the compressed air ducts independently for each structural module 1.

List of items

| | |
|---|---|
| 1 | structural module |
| 2 | leading edge structure |
| 3 | first connecting member |
| 4 | second connecting member |
| 5 | first spar section |
| 6 | second spar section |
| 7 | rear attachments |
| 8 | first seat |
| 9 | first recess |
| 10 | second recess |
| 11 | second seat |
| 12 | front attachments |
| 13 | external balancing mass |
| 14 | holes in the first connecting member |
| 15 | additional hole in the first connecting member |
| 16 | first projection |
| 17 | second projection |
| 18 | holes in the first and second projection |
| 19 | circular through-seat |
| 20 | radial through holes |
| 21 | first passages |
| 22 | second passages |
| 23 | torsional actuator |
| 24 | torsion bar |
| 25 | actuating devices |
| 26 | preload crown |
| 27 | central portion |
| 28 | first end torsion bar |
| 29 | second end torsion bar |
| 30 | axial bore |
| 31 | teeth |
| 32 | radial holes |
| 33 | device for preloading the torsional actuator |
| 34 | first auxiliary projection |

| 35 | second auxiliary projection |
|---|---|
| 36 | external protrusions |
| 37 | portion |
| 38 | holes of first and second auxiliary projections |
| 39 | holes of the external protrusions |
| 40 | first appendage |
| 41 | second appendage |
| 42 | first interface |
| 43 | second interface |
| 44 | housing holes |
| 45 | holes for connection to coating |
| 46 | shaped hole |
| 47 | extrudate |
| 48 | first shaped hole |
| 49 | second shaped hole |
| 50 | elongate element |
| 51 | first end elongate element |
| 52 | second end elongate element |
| S1 | first strain gauge |
| S2 | second strain gauge |
| S3 | third strain gauge |

**Claims**

1. Structural module for fixed or rotary wing, comprising:

a leading edge structure (2) comprising a first connecting member (3), a second connecting member (4) and at least one spar section (5, 6) interposed between the first connecting member (3) and the second connecting member (4) and integral with said first connecting member (3) and second connecting member (4); wherein each of said first connecting member (3) and second connecting member (4) is configured to engage with a respective adjacent structure;
a torsional actuator (23) mounted on the leading edge structure (2) and comprising a torsion bar (24) and actuating devices (25) operatively coupled to the torsion bar (24);
wherein the torsion bar (24) has a first end (28) connected to the first connecting member (3) and a second end (29) opposite the first end and connected to the second connecting member (4);
wherein the torsion bar (24) is mounted or mountable on the leading edge structure (2) with a preload torsion, so as to give the structural module (1) a respective predefined twist wherein, with respect to a rest condition of the leading edge structure (2), the first connecting member (3) is rotated with respect to the second connecting member (4);
wherein the actuating devices (25) are configured to vary a torsional stiffness of the torsion bar (24) and/or an angular geometry of the torsion bar (24), so as to vary the twist of the structural module (1) with respect to the predefined twist;
wherein the first connecting member (3) has a first seat (8) configured to accommodate the first end (28) of the torsion bar (24) while preventing rotation thereof, and the second connecting member (4) has a circular through-seat (19) configured to accommodate the second end (29) of the torsion bar (24) and allow rotation of the second end (29) relative to the first end (28) to impart to the torsion bar (24) said preload torsion; locking devices being interposed between the second end (29) and the circular through-seat (19) to lock said second end (29) in a plurality of preload positions each corresponding to a preload torsion of the torsion bar (24).

2. Structural module according to claim 1, wherein the torsion bar (24) is made of a shape memory alloy and the actuating devices (25) comprise at least one heating element operatively coupled to the torsion bar (24) and configured to heat said torsion bar (24); wherein the heating operated by the heating element produce a transformation of the stress-strain curve of the shape memory alloy torsion bar (24) and a different torsional elastic equilibrium point of the torsion bar (24) coupled to the leading edge structure (2); optionally, wherein said at least one heating element comprises a resistive element, optionally an electrical resistance wrapped around the torsion bar (24).

3. Structural module according to claim 1 or 2, wherein the torsion bar (24) is mounted on the leading edge structure (2) such that the actuating devices (25), when activated, produce an increase of the torsional stiffness of the torsion bar (24) and/or the change in the angular geometry and an increase or decrease in the twist of the leading edge structure (3) with respect to the predefined twist.

4. Structural module according to claim 1 or 2 or 3, wherein the locking devices comprise at least one radial through-hole (20) fashioned in the second connecting member (4), at least one radial hole (32) fashioned at the second end of the torsion bar (24), and at least one pin inserted into the radial through-hole (20) and the radial hole (32).

5. Structural module according to any one of claims 1 to 4, wherein the first connecting member (3) comprises at least one projection (16, 17) engageable with at least one recess (9, 10) of the respective adjacent structure and/or at least one recess engageable with at least one projection of the respective adjacent structure; wherein the second connecting member (4) comprises at least one projection engageable with at least one recess of the respective adjacent structure and/or at least one recess (9, 10) engageable with at least one projection (16, 17) of the respective adjacent structure.

6. Structural module according to claim 4, comprising a preload crown (26) fixed on the second end of the torsion bar (24) so as not to be able to rotate with respect to the torsion bar (24); the preload crown (26) being inserted into the circular through-seat (19); said radial hole (32) made at the second end of the torsion bar (24) being made in said preload crown (26); the preload crown (26) having a shaped profile configured to engage with a tool capable of applying a torque to the preload crown (26) and to the torsion bar (24).

7. Structural module according to any one of claims 1 to 6, wherein said at least one spar section (5, 6) comprises a first spar section (5) and a second spar section (6), each of said first spar section (5) and second spar section (6) being interposed between said first connecting member (3) and said second connecting member (4) and integral with said first connecting member (3) and second connecting member (4); wherein the torsion bar (24) is located between the first spar section (5) and the second spar section (6) and is substantially parallel to the first spar section (5) and the second spar section (6).

8. Structural module according to any one of claims 1 to 7, comprising:

   a first appendage (40) connected to the first connecting member (3) and extending towards a trailing edge of the wing;
   a second appendage (41) connected to the second connecting member (4) and extending towards the trailing edge of the wing;
   an elongate member (50) connecting one end of the first appendage (40) with one end of the second appendage (41) and disposed at the trailing edge of the wing.

9. Structural module according to claim 8, wherein the first connecting member (3) and the first appendage (40) together define a respective first rib or rib part of the structural module (1); wherein the second connecting member (4) and the second appendage (41) together define a respective second rib or rib part of the structural module (1).

10. Structural module according to claim 8 or 9, wherein the elongate element (50) is plate-shaped.

11. Structural module according to any one of claims 1 to 10, comprising strain sensors (S1, S2, S3) configured to detect deformations of the structural modulus (1); wherein said strain sensors (S1, S2, S3) are operatively connected to an electronic control unit configured and/or programmed to receive strain signals from the strain sensors (S1, S2, S3) and calculate the twist of the structural module (1) as a function of the received strain signals.

12. Structural module according to claim 11 when depending on one of claims 8 to 10, wherein the strain sensors (S1, S2, S3) are applied to the elongate element (50).

13. Structural module according to claim 11 or 12, wherein the electronic control unit is operatively connected to the actuating devices (25) and is configured and/or programmed to control the actuating devices (25) to vary the torsional stiffness and/or an angular geometry of the torsion bar (24) and the twist of the structural module (1).

14. Fixed or rotary wing, comprising:

   a plurality of structural modules (1) according to at least one of the preceding claims, arranged sequentially along a longitudinal development direction of the wing and mutually connected;
   a covering disposed on said plurality of structural modules (1) and defining a surface of the wing.

15. Fixed or rotary wing according to claim 14 when the structural modules (1) are in accordance with claim 13, wherein the electronic control unit is configured and/or programmed to:

   calculate a wing geometry as a function of strain signals from the structural modules (1);
   control the actuating devices (25) of each structural module (1) independently.

**Patentansprüche**

1. Strukturmodul für einen fixierten oder drehbaren Flügel, umfassend:

   eine vordere Randstruktur (2), welche ein erstes Verbindungselement (3), ein zweites Verbindungselement (4) und wenigstens einen Holmabschnitt (5, 6) umfasst, welcher zwischen dem ersten Verbindungselement (3) und dem zweiten Verbindungselement (4) eingefügt ist und einstückig ist mit dem ersten Verbindungselement (3) und dem zweiten Verbindungselement (4); wobei jedes von dem ersten Verbindungselement (3) und dem zweiten Verbindungselement (4) dazu eingerichtet ist, mit einer jeweils benachbarten Struktur in Eingriff zu stehen; einen Torsionsaktuator (23), welcher an der vorderen Randstruktur (2) befestigt ist und eine Torsionsstange (24) und Aktuatorvorrichtungen (25) umfasst, welche operativ mit der Torsionsstange (24) gekoppelt sind;

wobei die Torsionsstange (24) ein erstes Ende (28), welches mit dem erst Verbindungselement (3) verbunden ist, und ein zweites Ende (29) aufweist, welches dem ersten Ende entgegengesetzt und mit dem zweiten Verbindungselement (4) verbunden ist;

wobei die Torsionsstange (24) mit einer Vorspannungstorsion an der vorderen Randstruktur (2) befestigt oder befestigbar ist, um dem Strukturmodul (1) eine jeweilig vorbestimmte Verdrehung zu geben wobei das erste Verbindungselement (3) in Bezug auf einen Ruhezustand der vorderen Randstruktur (2) in Bezug auf das zweite Verbindungselement (4) gedreht ist;

wobei die Aktuatorvorrichtungen (25) dazu eingerichtet sind, eine Torsionssteifheit der Torsionsstange (24) und/oder eine Winkelgeometrie der Torsionsstange (24) zu variieren, um die Verdrehung des Strukturmoduls (1) in Bezug auf die vorbestimmte Verdrehung zu variieren;

wobei das erste Verbindungselement (3) einen ersten Sitz (8) aufweist, welcher dazu eingerichtet ist, das erste Ende (28) der Torsionsstange (24) aufzunehmen, während er eine Drehung davon verhindert, und das zweite Verbindungselement (4) einen kreisförmigen Durchgangssitz (19) aufweist, welcher dazu eingerichtet ist, das zweite Ende (29) der Torsionsstange (24) aufzunehmen und eine Drehung des zweiten Endes (29) relativ zu dem ersten Ende (28) zuzulassen, um der Torsionsstange (24) die Vorspannungstorsion zu gewähren; wobei Klemmvorrichtungen zwischen dem zweiten Ende (29) und dem kreisförmigen Durchgangssitz (19) eingefügt sind, um das zweite Ende (29) in einer Mehrzahl von Vorspannungspositionen zu klemmen, wobei jede einer Vorspannungstorsion der Torsionsstange (24) entspricht.

2. Strukturmodul nach Anspruch 1, wobei die Torsionsstange (24) aus einer Formgedächtnislegierung gefertigt ist und die Aktuatorvorrichtungen (25) wenigstens ein Heizelement umfassen, welches operativ mit der Torsionsstange (24) gekoppelt ist und dazu eingerichtet ist, die Torsionsstange (24) zu heizen; wobei das Heizen, welches von dem Heizelement durchgeführt wird, eine Transformation der Spannungs-DehnungsKurve der Torsionsstange (24) aus Formgedächtnislegierung und einen anderen torsionselastischen Gleichgewichtspunkt der Torsionsstange (24) ergibt, welche mit der vorderen Randstruktur (2) gekoppelt ist; optional wobei das wenigstens eine Heizelement in Widerstandselements umfasst, optional einen elektrischen Widerstand, welcher um die Torsionsstange (24) gehüllt ist.

3. Strukturmodul nach Anspruch 1 oder 2, wobei die Torsionsstange (24) derart an der vorderen Randstruktur (2) befestigt ist, dass die Aktuatorvorrichtungen (25), wenn sie aktiviert sind, einen Anstieg der Torsionssteifheit der Torsionsstange (24) und/oder die Änderung in der Winkelgeometrie und einen Anstieg oder Abfall in der Verdrehung der vorderen Randstruktur (3) in Bezug auf die vorbestimmte Verdrehung ergeben.

4. Strukturmodul nach Anspruch 1 oder 2 oder 3, wobei die Klemmvorrichtungen wenigstens ein radiales Durchgangsloch (20) umfassen, welches in dem zweiten Verbindungselement (4) eingepasst ist, wobei wenigstens ein radiales Loch (32) an dem zweiten Ende der Torsionsstange (24) eingepasst ist, und wenigstens ein Stift in das radiale Durchgangsloch (20) und das radiale Loch (32) eingesetzt ist.

5. Strukturmodul nach einem der Ansprüche 1 bis 4, wobei das erste Verbindungselement (3) wenigstens einen Vorsprung (16, 17), welcher mit wenigstens einer Vertiefung (9, 10) der benachbarten Struktur in Eingriff bringbar ist, und/oder wenigstens eine Vertiefung umfasst, welche mit wenigstens einem Vorsprung der jeweiligen benachbarten Struktur in Eingriff bringbar ist; wobei das zweite Verbindungselement (4) wenigstens einen Vorsprung mit wenigstens einer Vertiefung der jeweiligen benachbarten Struktur und/oder wenigstens eine Vertiefung (9, 10) umfasst, welche mit wenigstens einem Vorsprung (16, 17) der jeweiligen benachbarten Struktur in Eingriff bringbar ist.

6. Strukturmodul nach Anspruch 4, umfassend eine Vorspannungskrone (26), welche an dem zweiten Ende der Torsionsstange (24) fixiert ist, um nicht dazu in der Lage zu sein, in Bezug auf die Torsionsstange (24) zu drehen; wobei die Vorspannungskrone (26) in den kreisförmigen Durchgangssitz (19) eingesetzt ist; wobei das radiale Loch (32), welches an dem zweiten Ende der Torsionsstange (24) gefertigt ist, in der Vorspannungskrone (26) gefertigt ist; wobei die Vorspannungskrone (26) ein geformtes Profil aufweist, welches dazu eingerichtet ist, mit einer Vorrichtung in Eingriff zu stehen, welche dazu im Stande ist, ein Drehmoment auf die Vorspannungskrone (26) und die Torsionsstange (24) auszuüben.

7. Strukturmodul nach einem der Ansprüche 1 bis 6, wobei der wenigstens eine Holmabschnitt (5,6) einen ersten Holmabschnitt (5) und einen zweiten Holmabschnitt (6) umfasst, wobei jeder von dem ersten Holmabschnitt (5) und zweiten Holmabschnitt (6) zwischen dem ersten Verbindungselement (3) und dem zweiten Verbindungselement (4) eingefügt ist und mit dem ersten Verbindungselement (3) und dem zweiten Verbindungselement (4) integral ist; wobei die Torsionsstange (24) zwischen dem ersten Holmabschnitt (5) und dem zweiten Holmabschnitt (6) angeordnet ist und im Wesentlichen parallel zu dem ersten Holmabschnitt (5) und dem zweiten Holmabschnitt (6) ist.

8.  Strukturmodul nach einem der Ansprüche 1 bis 7, umfassend:

    einen ersten Fortsatz (40), welcher mit dem ersten Verbindungselement (3) verbunden ist und sich in Richtung eines hinteren Randes des Flügels erstreckt;
    einen zweiten Fortsatz (41), welcher mit dem zweiten Verbindungselement (4) verbunden ist und sich in Richtung des hinteren Randes des Flügels erstreckt;
    ein längliches Element (50) welches ein Ende des ersten Fortsatzes (40) mit einem Ende des zweiten Fortsatzes (41) verbindet und an dem hinteren Rand des Flügels angeordnet ist.

9.  Strukturmodul nach Anspruch 8, wobei das erste Verbindungselement (3) und der erste Fortsatz (40) gemeinsam eine jeweilige erste Strebe oder Strebenabschnitt des Strukturmoduls (1) definieren; wobei das zweite Verbindungselement (4) und der zweite Fortsatz (41) gemeinsam eine jeweilige zweite Strebe oder Strebenabschnitt des Strukturmoduls (1) definieren.

10. Strukturmodul nach Anspruch 8 oder 9, wobei das längliche Element (50) plattenförmig ist.

11. Strukturmodul nach einem der Ansprüche 1 bis 10, umfassend Spannungssensoren (S1, S2, S3), welche dazu eingerichtet sind, Deformationen des Strukturmoduls (1) festzustellen; wobei die Spannungssensoren (S1, S2, S3) betriebsfähig mit einer elektronischen Kontrolleinheit verbunden sind, welche dazu eingerichtet und/oder programmiert ist, Spannungssignale von den Spannungssensoren (S1, S2, S3) zu empfangen und die Verdrehung des Strukturmoduls (1) als eine Funktion der empfangenen Spannungssignale zu berechnen.

12. Strukturmodul nach Anspruch 11 wenn abhängig von einem der Ansprüche 8 bis 10, wobei die Spannungssensoren (S1, S2, S3) an dem länglichen Element (50) angebracht sind.

13. Strukturmodul nach Anspruch 11 oder 12, wobei die elektronische Kontrolleinheit betriebsfähig mit den Aktuatorvorrichtungen (25) verbunden ist und dazu eingerichtet und/oder programmiert ist, die Aktuatorvorrichtungen (25) zu steuern, um die Torsionssteifheit und/oder eine Winkelgeometrie der Torsionsstange (24) und die Verdrehung des Strukturmoduls (1) zu variieren.

14. Fixierter oder drehbarer Flügel, umfassend:

    eine Mehrzahl von Strukturmodulen (1) nach wenigstens einem der vorhergehenden Ansprüche, welche sequenziell entlang einer longitudinalen Entwicklungsrichtung des Flügels angeordnet und gegenseitig verbunden sind;
    eine Abdeckung, welche an der Mehrzahl von Strukturmodulen (1) angeordnet ist und eine Fläche des Flügels definiert.

15. Fixierter oder drehbarer Flügel nach Anspruch 14, wenn die Strukturmodule (1) Anspruch 13 entsprechen, wobei die elektronische Kontrolleinheit eingerichtet und/oder programmiert ist zum:

    Berechnen einer Flügelgeometrie als Funktion von Spannungssignalen von den Strukturmodulen (1);
    unabhängigen Steuern der Aktuatorvorrichtungen (25) von jedem Strukturmodul (1).

**Revendications**

1.  Module structurel pour aile fixe ou rotative, comprenant :

    une structure de bord d'attaque (2) comprenant un premier élément de raccordement (3), un second élément de raccordement (4) et au moins une section d'entraînement (5, 6) interposée entre le premier élément de raccordement (3) et le second élément de raccordement (4) et solidaire desdits premier élément de raccordement (3) et second élément de raccordement (4) ; chacun dudit premier élément de raccordement (3) et second élément de raccordement (4) étant configuré pour s'engager avec une structure adjacente respective ;
    un actionneur de torsion (23) monté sur la structure de bord d'attaque (2) et comprenant une barre de torsion (24) et des dispositifs d'actionnement (25) fonctionnellement accouplés à la barre de torsion (24) ;
    la barre de torsion (24) ayant une première extrémité (28) raccordée au premier élément de raccordement (3) et une seconde extrémité (29) opposée à la première extrémité et raccordée au second élément de raccordement (4) ;
    la barre de torsion (24) étant montée ou pouvant être montée sur la structure de bord d'attaque (2) avec une torsion de précharge, afin de donner au module structurel (1) une torsion prédéfinie respective, par rapport à un état de repos de la structure de bord d'attaque (2), le premier élément de raccordement (3) étant tourné par rapport au second élément de raccordement (4) ;

les dispositifs d'actionnement (25) étant configurés pour faire varier une rigidité de torsion de la barre de torsion (24) et/ou une géométrie angulaire de la barre de torsion (24), afin de faire varier la torsion du module structurel (1) par rapport à la torsion prédéfinie ;

le premier élément de raccordement (3) ayant une première assise (8) configurée pour loger la première extrémité (28) de la barre de torsion (24) tout en empêchant une rotation de celle-ci, et le second élément de raccordement (4) ayant une assise traversante circulaire (19) configurée pour loger la seconde extrémité (29) de la barre de torsion (24) et permettre une rotation de la seconde extrémité (29) par rapport à la première extrémité (28) pour conférer à la barre de torsion (24) ladite torsion de précharge ; des dispositifs de verrouillage étant interposés entre la seconde extrémité (29) et l'assise traversante circulaire (19) pour verrouiller ladite seconde extrémité (29) dans une pluralité de positions de précharge correspondant chacune à une torsion de précharge de la barre de torsion (24).

2. Module structurel selon la revendication 1, la barre de torsion (24) étant constituée d'un alliage à mémoire de forme et les dispositifs d'actionnement (25) comprenant au moins un élément de chauffage fonctionnellement accouplé à la barre de torsion (24) et configuré pour chauffer ladite barre de torsion (24) ; le chauffage opéré par l'élément de chauffage produisant une transformation de la courbe de tension et contrainte de la barre de torsion (24) en alliage à mémoire de forme et un point d'équilibre élastique torsionnel différent de la barre de torsion (24) accouplée à la structure de bord d'attaque (2) ; éventuellement, ledit au moins un élément de chauffage comprenant un élément résistif, éventuellement une résistance électrique enveloppée autour de la barre de torsion (24).

3. Module structurel selon la revendication 1 ou 2, la barre de torsion (24) étant montée sur la structure de bord d'attaque (2) de sorte que les dispositifs d'actionnement (25), lorsqu'ils sont activés, produisent une augmentation de la rigidité de torsion de la barre de torsion (24) et/ou le changement dans la géométrie angulaire et une augmentation ou une baisse dans la torsion de la structure de bord d'attaque (3) par rapport à la torsion prédéfinie.

4. Module structurel selon la revendication 1 ou 2 ou 3, les dispositifs de verrouillage comprenant au moins un trou traversant radial (20) façonné dans le second élément de raccordement (4), au moins un trou radial (32) façonné au niveau de la seconde extrémité de la barre de torsion (24), et au moins une goupille insérée dans le trou traversant radial (20) et le trou radial (32).

5. Module structurel selon l'une quelconque des revendications 1 à 4, le premier élément de raccordement (3) comprenant au moins une projection (16, 17) pouvant être engagée avec au moins un renfoncement (9, 10) de la structure adjacente respective et/ou au moins un renfoncement pouvant être engagé avec au moins une projection de la structure adjacente respective ; le second élément de raccordement (4) comprenant au moins une projection pouvant être engagée avec au moins un renfoncement de la structure adjacente respective et/ou au moins un renfoncement (9, 10) pouvant être engagé avec au moins une projection (16, 17) de la structure adjacente respective.

6. Module structurel selon la revendication 4, comprenant une couronne de précharge (26) fixée sur la seconde extrémité de la barre de torsion (24) afin de ne pas pouvoir tourner par rapport à la barre de torsion (24) ; la couronne de précharge (26) étant insérée dans l'assise traversante circulaire (19) ; ledit trou radial (32) fabriqué au niveau de la seconde extrémité de la barre de torsion (24) étant fabriqué dans ladite couronne de précharge (26) ; la couronne de précharge (26) ayant un profil mis en forme configuré pour s'engager avec un outil capable d'appliquer un couple à la couronne de précharge (26) et à la barre de torsion (24).

7. Module structurel selon l'une quelconque des revendications 1 à 6, ladite au moins une section d'entraînement (5, 6) comprenant une première section d'entraînement (5) et une seconde section d'entraînement (6), chacune desdites première section d'entraînement (5) et seconde section d'entraînement (6) étant interposée entre ledit premier élément de raccordement (3) et ledit second élément de raccordement (4) et solidaires desdits premier élément de raccordement (3) et second élément de raccordement (4) ; la barre de torsion (24) étant localisée entre la première section d'entraînement (5) et la seconde section d'entraînement (6) et étant sensiblement parallèle à la première section d'entraînement (5) et la seconde section d'entraînement (6).

8. Module structurel selon l'une quelconque des revendications 1 à 7, comprenant :

un premier appendice (40) raccordé au premier élément de raccordement (3) et s'étendant vers un bord de fuite de l'aile ;
un second appendice (41) raccordé au second élément de raccordement (4) et s'étendant vers le bord de fuite de l'aile ;
un élément allongé (50) raccordant une extrémité du premier appendice (40) à une extrémité du second appendice (41) et disposé au niveau du bord de fuite de l'aile.

9. Module structurel selon la revendication 8, le premier élément de raccordement (3) et le premier appendice (40) conjointement définissant une première nervure ou partie de nervure respective du module structurel (1) ; le second élément de raccordement (4) et le second appendice (41) conjointement définissant une seconde nervure ou partie de nervure respective du module structurel (1).

10. Module structurel selon la revendication 8 ou 9, l'élément allongé (50) étant en forme de plaque.

11. Module structurel selon l'une quelconque des revendications 1 à 10, comprenant des capteurs de contrainte (S1, S2, S3) configurés pour détecter des déformations du module structurel (1) ; lesdits capteurs de contrainte (S1, S2, S3) étant fonctionnellement raccordés à une unité de commande électronique configurée et/ou programmée pour recevoir des signaux de contrainte de la part des capteurs de contrainte (S1, S2, S3) et calculer la torsion du module structurel (1) comme une fonction des signaux de contrainte reçus.

12. Module structurel selon la revendication 11 lorsqu'elle dépend de l'une des revendications 8 à 10, les capteurs de contrainte (S1, S2, S3) étant appliqués à l'élément allongé (50).

13. Module structurel selon la revendication 11 ou 12, l'unité de commande électronique étant fonctionnellement raccordée aux dispositifs d'actionnement (25) et étant configurée et/ou programmée pour commander aux dispositifs d'actionnement (25) de faire varier la rigidité de torsion et/ou la géométrie angulaire de la barre de torsion (24) et la torsion du module structurel (1).

14. Aile fixe ou rotative, comprenant :

une pluralité de modules structurels (1) selon au moins l'une des revendications précédentes, agencés séquentiellement le long d'un sens de développement longitudinal de l'aile et mutuellement raccordés ;
un recouvrement disposé sur ladite pluralité de modules structurels (1) et définissant une surface de l'aile.

15. Aile fixe ou rotative selon la revendication 14 lorsque les modules structurels (1) se trouvent selon la revendication 13, l'unité de commande électronique étant configurée et/ou programmée pour :

calculer une géométrie d'aile comme une fonction de signaux de contrainte à partir des modules structurels (1) ;
commander les dispositifs d'actionnement (25) de chaque module structurel (1) indépendamment.

FIG.1

FIG.2

FIG.3

FIG.4

FIG.5

FIG.6

FIG.7

FIG.8

FIG.9

FIG.10

FIG.11

51

50

52

S1 S2 S3 50

FIG.12

FIG.13

FIG.14

FIG.15

FIG.16

**REFERENCES CITED IN THE DESCRIPTION**

**Patent documents cited in the description**

- US 6499952 B
- US 6065934 A
- EP 3127804 A
- EP 3453609 A1
- EP 2428679 A2